# EUROPÄISCHE PATENTANMELDUNG

(11) **EP 3 848 187 A1**
(43) Veröffentlichungstag der Anmeldung: **14.07.2021**
(21) Anmeldenummer: 21150662.1
(22) Anmeldetag: 08.01.2021
(51) Int. Cl.: B29C 70/32, B29C 70/34, B29C 70/44, B29C 53/62, B29C 33/02

(54) **VORRICHTUNG UND VERFAHREN ZUR BILDUNG GROSSVOLUMIGER, HOHLKÖRPERFÖRMIGER FASERVERBUND-BAUTEILE**

(30) Priorität: 10.01.2020 AT 500112020
(71) Anmelder: Jäger, Robert, 4873 Frankenburg (AT); ÖSWAG Maschinenbau Nfg. GmbH & Co KG, 4020 Linz (AT)
(72) Erfinder: Jäger, Robert, 4873 Frankenburg (AT)
(74) Vertreter: Puchberger & Partner Patentanwälte

(57) **Zusammenfassung**

Vorrichtung und verfahren zur Bildung großvolumiger, hohlkörperförmiger Faserverbund-Bauteile, wobei die Vorrichtung in der Betriebsstellung folgende Komponenten umfasst:
- eine Stützstruktur (1) mit einem Kern (2) und mit einer den Kern (2) umgebenden Manschette (3),
- eine zwischen Kern (2) und Manschette (3) eingeklemmte, flexible Unterdruckkammer (4) in der die auszuhärtenden Faserverbund-Bestandteile (5) angeordnet sind,
- eine an die Unterdruckkammer (4) angeschlossene Unterdruckleitung (6) zur Erzeugung des Unterdrucks in der Unterdruckkammer (4),
- mindestens ein flexibles Druckglied (8) zur flächigen, und insbesondere gleichmäßigen, Aufbringung der auf die flexible Unterdruckkammer (4) wirkenden Klemmkraft,
- und eine den Innenraum der Unterdruckkammer (4) beheizende Heizvorrichtung (7) zur Aushärtung der Faserverbund-Bestandteile (5).

## Beschreibung

Die Erfindung betrifft eine Vorrichtung und ein Verfahren gemäß den Oberbegriffen der unabhängigen Patentansprüche.

Es ist bekannt, CFK-Bauteile, also Bauteile aus kohlefaserverstärktem Kunststoff, in sogenannten Autoklaven herzustellen. Dabei werden CFK-Bestandteile, wie beispielsweise mit Harz getränkte Kohlefasergewebe, zuerst in eine beliebige Form gebracht. Um Sauerstoffblasen im Bauteil zu vermeiden, wird im Bereich der CFK-Bestandteile ein Unterdruck bzw. ein Vakuum erzeugt. Zusätzlich werden die CFK-Bestandteile in einem sogenannten Autoklaven ausgehärtet. Ein Autoklav ist ein Druckbehälter, der zusätzlich eine thermische Behandlung im Überdruckbereich ermöglicht. Bei der Verarbeitung von CFK-Bauteilen ist es zudem gegebenenfalls notwendig, als brandhemmende Maßnahmen Stickstoff im Autoklaven vorzusehen.

Während dieser herkömmliche Prozess für CFK-Bauteile mit geringer Baugröße relativ einfach und wirtschaftlich umsetzbar ist, ist eine Aushärtung von großvolumigen, hohlkörperförmigen CFK-Bauteilen in einem Autoklaven mit einem sehr hohen Aufwand verbunden.

Für großvolumige, hohlkörperförmige CFK-Bauteile, wie beispielsweise ringförmige Bauteile oder großvolumige Behälter, die einen Durchmesser und/oder eine Länge von mehr als 2 m aufweisen, sind dementsprechend große Autoklaven notwendig. Derartige Autoklaven sind teuer in der Anschaffung, was unter Berücksichtigung der meist geringen Stückzahl der großvolumigen Bauteile die Wirtschaftlichkeit der Herstellung stark beeinträchtigt.

Aufgabe der Erfindung ist es nun, eine Vorrichtung und ein Verfahren zu schaffen, die eine effiziente und insbesondere wirtschaftliche Möglichkeit zur Bildung großvolumiger, hohlkörperförmiger Faserverbund-Bauteile ermöglichen. Die Faserverbund-Bauteile sind bevorzugt unter erhöhter Temperatur und unter erhöhten Druckkräften ausgehärtete Bauteile, wie beispielsweise Bauteile aus kohlefaserverstärktem oder aramidfaserverstärktem Kunststoff.

Die erfindungsgemäße Aufgabe wird insbesondere durch die Merkmale der unabhängigen Patentansprüche gelöst.

Die Erfindung betrifft insbesondere eine Vorrichtung zur Bildung großvolumiger, hohlkörperförmiger Faserverbund-Bauteile, wobei die Vorrichtung in der Betriebsstellung folgende Komponenten umfasst:
- eine Stützstruktur mit einem Kern und mit einer den Kern umgebenden Manschette,
- eine zwischen Kern und Manschette eingeklemmte, flexible Unterdruckkammer in der die auszuhärtenden Faserverbund-Bestandteile angeordnet sind,
- eine an die Unterdruckkammer angeschlossene Unterdruckleitung zur Erzeugung des Unterdrucks, insbesondere eines Vakuums, in der Unterdruckkammer,
- mindestens ein flexibles Druckglied zur flächigen, und insbesondere gleichmäßigen, Aufbringung der auf die flexible Unterdruckkammer, und insbesondere auf die in der Unterdruckkammer angeordneten Faserverbund-Bestandteile, wirkenden Klemmkraft,
- und eine den Innenraum der Unterdruckkammer beheizende Heizvorrichtung zur Aushärtung der Faserverbund-Bestandteile.

Gegebenenfalls ist vorgesehen, dass das Druckglied mindestens einen entlang der Unterdruckkammer verlaufenden elastisch verformbaren schlauch- oder balgartigen Druckkörper umfasst, dessen Innenbereich zur Erzeugung der Klemmkraft mit Überdruck beaufschlagt ist, wobei bevorzugt mehrere dieser Druckkörper vorgesehen sind, die zusammen ein matten- und/oder ringförmiges Druckglied bilden.

Gegebenenfalls ist vorgesehen, dass ein Druckglied zwischen dem Kern und der Unterdruckkammer verläuft.

Gegebenenfalls ist vorgesehen, dass ein Druckglied zwischen der Unterdruckkammer und der Manschette verläuft.

Gegebenenfalls ist vorgesehen, dass jene Seitenfläche des Druckglieds, die der Unterdruckkammer zugewandt ist, eine der Form des zu bildenden Faserverbund-Bauteils angepasste Form aufweist.

Gegebenenfalls ist vorgesehen, dass die Wände der Unterdruckkammer durch mindestens eine Dichtfolie gebildet sind.

Gegebenenfalls ist vorgesehen, dass die Wände der Unterdruckkammer durch zwei Dichtfolien gebildet sind, die gegebenenfalls durch zwei Dichtleisten gegenüber einander abgedichtet sind.

Gegebenenfalls ist vorgesehen, dass die Unterdruckkammer, zur Erzeugung eines hohlkörperförmigen Faserverbund-Bauteils, den Kern ringförmig oder hohlkörperförmig umgibt.

Gegebenenfalls ist vorgesehen, dass die Vorrichtung einen schichtförmigen Aufbau aufweist, der von innen nach außen folgende Schichten umfasst:
- Kern,
- erste Wand der Unterdruckkammer,
- zweite Wand der Unterdruckkammer,
- Manschette,
- wobei zwischen der ersten Wand und der zweiten Wand der Unterdruckkammer die auszuhärtenden Faserverbund-Bestandteile angeordnet sind,
- wobei zwischen dem Kern und der Unterdruckkammer und/oder zwischen der Unterdruckkammer und der Manschette ein Druckglied verläuft,
- und wobei gegebenenfalls eine Heizmatte der Heizvorrichtung zwischen zwei Schichten angeordnet ist.

Gegebenenfalls ist vorgesehen, dass der Kern und/oder die Manschette gasdurchlässig bzw. undicht ist oder sind.

Gegebenenfalls ist vorgesehen, dass die Manschette mindestens einen flexiblen Wickelkörper umfasst, der fest anliegend um die innenliegenden Komponenten der Vorrichtung gewickelt ist, wobei der Wickelkörper beispielsweise ein wickelbares Seil, ein Band oder eine Kette ist.

Insbesondere betrifft die Erfindung ein Verfahren zur Bildung großvolumiger, hohlkörperförmiger Faserverbund-Bauteile, umfassend folgende Schritte:
- Anordnen einer flexiblen Unterdruckkammer zwischen einem Kern und einer den Kern umgebenden Manschette, wobei in der Unterdruckkammer die auszuhärtenden Faserverbund-Bestandteile angeordnet werden,
- Erzeugen eines Unterdrucks, insbesondere eines Vakuums, in der Unterdruckkammer,
- Einklemmen der Unterdruckkammer und der in der Unterdruckkammer angeordneten Faserverbund-Bestandteile zwischen dem Kern und der Manschette durch Erzeugen einer Klemmkraft mithilfe mindestens eines flexiblen Druckglieds, wobei die Klemmkraft flächig und insbesondere gleichmäßig auf die flexible Unterdruckkammer wirkt,
- und Aushärten der Faserverbund-Bestandteile durch Beheizen des Innenraums der Unterdruckkammer durch eine Heizvorrichtung.

Gegebenenfalls ist vorgesehen, dass eine erste Dichtfolie um den Kern gelegt wird,
- dass anschließend Faserverbund-Bestandteile, insbesondere Kohlefasern, im Bereich der ersten Dichtfolie um den Kern gelegt werden,
- dass anschließend eine zweite Dichtfolie im Bereich der Faserverbund-Bestandteile um den Kern gelegt wird, wobei die erste Dichtfolie und die zweite Dichtfolie gegenüber einander durch eine Überlappung und insbesondere über Dichtleisten abgedichtet werden, um die flexible Unterdruckkammer zu bilden, und wobei mindestens eine Unterdruckleitung an die Unterdruckkammer angeschlossen wird,
- dass anschließend das Druckglied im Bereich der Unterdruckkammer um den Kern gelegt wird,
- und dass anschließend im Bereich des Druckglieds die Manschette um den Kern gelegt und insbesondere gewickelt wird.

Gegebenenfalls ist vorgesehen, dass das flexible Druckglied, insbesondere ein elastisch verformbarer, schlauch- oder balgartiger Druckkörper des Druckglieds, zur Erzeugung der Klemmkraft mit einem Überdruck beaufschlagt und insbesondere gefüllt wird.

Gegebenenfalls ist vorgesehen, dass im Bereich der Unterdruckkammer zwischen dem Kern und der Manschette eine Heizmatte der Heizvorrichtung um den Kern gelegt wird, über die die Faserverbund-Bestandteile beheizt und ausgehärtet werden.

Gegebenenfalls ist vorgesehen, dass das Druckglied mit einem von der Heizvorrichtung beheizten Medium, wie insbesondere heiße Druckluft, gefüllt und/oder durchströmt wird.

Gegebenenfalls ist vorgesehen, dass eine Injektionsleitung an die Unterdruckkammer angeschlossen wird oder ist, über die mindestens ein weiterer Faserverbund-Bestandteil, insbesondere Harz, in die Unterdruckkammer injiziert wird, und dass der weitere Faserverbund-Bestandteil später durch Beheizen des Innenraums der Unterdruckkammer durch die Heizvorrichtung ausgehärtet wird.

Durch die erfindungsgemäße Ausgestaltung ist die Verwendung großvolumiger Autoklaven nicht mehr notwendig.

Das Druckglied ist insbesondere derart ausgestaltet, dass eine gleichmäßige Kraftaufbringung auf die auszuhärtenden Faserverbund-Bestandteile erfolgt. Insbesondere ist das Druckglied derart ausgestaltet, dass dessen den Faserverbund-Bestandteil zugewandte Fläche der Form des zu bildenden Faserverbund-Bauteils angepasst ist oder entspricht. Alternativ oder zusätzlich kann zwischen den Faserverbund-Bestandteilen und dem Druckglied eine Form, insbesondere eine starre Form, vorgesehen sein, die die Form des zu bildenden Faserverbund-Bauteils bestimmt.

Das Druckglied umfasst bevorzugt zumindest einen schlauch- oder balgartigen Druckkörper. Das Druckglied bzw. dessen Druckkörper ist bevorzugt elastisch verformbar. Durch Beaufschlagung des Innenbereichs des Druckkörpers bzw. des Druckglieds wird in der Regel eine elastische Dehnung bzw. Aufweitung bewirkt. Ist das Druckglied bzw. der Druckkörper zwischen Kern und Manschette, insbesondere zwischen der flexiblen Unterdruckkammer und dem Kern oder der Manschette, angeordnet, so kann sich dieser nicht ungehindert ausdehnen oder aufweiten, sondern bewirkt eine auf den Faserverbund-Bauteil bzw. auf die Unterdruckkammer wirkende Klemmkraft.

Durch die spezielle Ausgestaltung des Druckglieds wird bevorzugt eine flächige und bevorzugt gleichmäßige Aufbringung der Klemmkraft bewirkt, was insbesondere bedeutet, dass der durch die Klemmkraft auf die Faserverbund-Bestandteile wirkende Druck über deren Verlauf im Wesentlichen konstant ist. Durch diese flächige gleichmäßige Aufbringung der Klemmkraft bzw. des Drucks können gleichmäßige Faserverbund-Bauteile hergestellt werden.

Die Beaufschlagung mit Überdruck geschieht beispielsweise durch Einleiten von Druckluft oder eines beliebigen anderen unter Überdruck stehenden Fluids. Gegebenenfalls kann dieses Fluid, insbesondere die Druckluft, durch eine Heizvorrichtung beheizt sein, sodass dadurch auch der Innenraum der Unterdruckkammer und damit auch die Faserverbund-Bestandteile beheizt werden. Um die Beheizung über längere Zeit konstant zu halten, kann vorgesehen sein, dass das beheizte Fluid das Druckglied bzw. den Druckkörper zirkulierend durchströmt. Diese Durchströmung geschieht bevorzugt unter Überdruck.

Alternativ oder zusätzlich kann zur Beheizung und Aushärtung der Faserverbund-Bestandteile eine Heizmatte der Heizvorrichtung vorgesehen sein. Diese Heizmatte kann beispielsweise eine elektrische Heizmatte sein, die entlang des Verlaufs der Unterdruckkammer bzw. der Faserverbund-Bestandteile in die Vorrichtung eingelegt wird. Die elektrische Speisung der Heizmatte kann von außen erfolgen.

Bevorzugt ist vorgesehen, dass das mindestens eine Druckglied und dessen Druckkörper aus einem flexiblen Material gebildet sind, das zusätzlich eine ausreichende Temperaturbeständigkeit aufweist. Insbesondere soll das Material die benötigten Eigenschaften bis zu einer Temperatur von mindestens 100, bevorzugt mindestens 220° oder mehr aufweisen. Als beispielhafte Materialien können hoch beständiger Silikon-Gummi bzw. Silikon-Kautschuk genannt werden, insbesondere durch Extrusion, durch Vulkanisation und/oder durch drucklose Vulkanisation hergestellter Silikon-Kautschuk. Gegebenenfalls können die Produkte Elastonsil R401/30, Elastonsil R401/20 oder Hokosil HokoFLEX 35° Shore A - STQ / STQplus +250 verwendet werden.

Die Flexibilität erlaubt es, neben der gleichmäßigen Verteilung der Klemmkraft auch Unebenheiten auszugleichen, ohne dabei lokale Kraftspitzen zu erzeugen.

Die vom Druckglied ausgehende Klemmkraft wirkt im Wesentlichen zwischen dem Kern und der Manschette. Durch die selbsttragende Ausgestaltung werden die gesamten Klemmkräfte von der Vorrichtung selbst aufgenommen.

Während der Herstellung wirkt in der Unterdruckkammer ein Unterdruck. Bevorzugt ist die Unterdruckkammer maßgeblich durch mindestens eine flexible Dichtfolie, bevorzugt durch zwei übereinander gelegte flexible Dichtfolien, begrenzt, wobei zwischen den Dichtfolien die auszuhärtenden Faserverbund-Bestandteile angeordnet werden. Wird nun ein Unterdruck angelegt, so heben sich die Unterdruckkräfte der Wände der Unterdruckkammer gegeneinander auf, womit die Unterdruckkammer auch nach angelegtem Unterdruck bevorzugt ein selbsttragendes Gebilde ist, das extern nicht extra gestützt werden muss. Die Unterdruckkammer dient vorrangig dazu, Lufteinschlüsse in dem fertigen Bauteil weitestgehend zu vermeiden.

Das zu bildende Faserverbund-Bauteil ist bevorzugt ein großvolumiges, hohlkörperförmiges und insbesondere ringförmiges Bauteil. Die Form des Kerns ist der Form des zu bildenden Faserverbund-Bauteils angepasst. Zur Bildung eines ringförmigen Bauteils weist der Kern beispielsweise eine zylinderförmige Form auf, auf die schichtweise die Komponenten der Vorrichtung aufgebracht werden können. Gegebenenfalls ist das Faserverbund-Bauteil tonnenförmig oder rotationsförmig ausgebildet, wobei auch in diesem Fall der Kern an die zu bildende Form angepasst ist.

Weist das zu bildende Faserverbund-Bauteil in seinem Innenraum eine oder mehrere Hinterschneidungen auf, so ist es vorteilhaft, den Kern mehrteilig und zerlegbar auszuführen, sodass dieser nach Aushärtung des Bauteils entnommen werden kann. Beispielsweise kann der Kern durch mehrere Stahlblechprofile zusammengesetzt sein.

Gegebenenfalls kann der Kern auch im Faserverbund-Bauteil verbleiben.

Die Faserverbund-Bestandteile sind beispielsweise Kohlenstofffasern und eine Kunststoffmatrix. Kohlenstofffasern können beispielsweise faserförmig oder gewebeförmig um den Kern gelegt werden. Dies kann manuell oder gegebenenfalls automatisch oder automatisiert erfolgen.

Die Kunststoffmatrix kann einen aushärtbaren Kunststoff, wie beispielsweise Epoxidharz, Duroplaste oder auch Thermoplaste, umfassen.

Die Kunststoffmatrix kann gemäß einer Ausführungsform über eine Injektionsleistung nachträglich in die Fasern eingebracht werden. Alternativ können auch sogenannte Prepregs bzw. bereits mit der Kunststoffmatrix getränkte Fasern um den Kern gelegt werden.

Die Verlegerichtung der Fasern kann je nach Anwendungsgebiet gewählt werden. Beispielsweise können die Fasern unidirektional, bidirektional, diagonal, etc. gelegt werden.

Die Injektionsleitungen verlaufen bevorzugt entlang des Verlaufs der Unterdruckkammer, insbesondere zwischen den Schichten, sodass die Injektionsleitungen andere Komponenten der Vorrichtung, wie beispielsweise das Druckglied, den Kern oder die Manschette, nicht durchsetzen müssen.

Auch die Unterdruckleitungen verlaufen bevorzugt zwischen den Schichten und insbesondere entlang des Verlaufs der Unterdruckkammer.

Bevorzugt ist der Kern schwenkbar und insbesondere drehbar gelagert. Durch die Schwenkbarkeit kann der Kern und insbesondere alle auf dem Kern aufgebrachten Komponenten während oder vor der Aushärtung verschwenkt werden. Dies kann vorteilhaft sein, damit sich ein gegebenenfalls in die Unterdruckkammer eingefülltes Harz nicht im unteren Bereich bzw. im Bodenbereich sammelt. Durch die Verschwenkung oder Drehung kann eine gleichmäßige Verteilung der noch nicht ausgehärteten Kunststoffmatrix bewirkt werden.

Die Drehbarkeit kann beispielsweise durch ein Schwenk- oder Drehlager der Stützstruktur gebildet sein.

Bevorzugt ist das gebildete CFK-Bauteil ein einstückiges Bauteil, wie beispielsweise ein einstückiger Ring oder ein einstückiger Hohlkörper. Bevorzugt weist das Bauteil eine rotationskörperförmige Form auf.

Die Zuführung von Druckluft, Kunststoffmatrix und/oder Strom kann über herkömmliche Drehdurchführungen erfolgen. Gegebenenfalls reicht es auch aus, flexible Leitungen zu verwenden, die einige Umdrehungen oder eine Verschwenkung des Kerns erlauben.

In weiterer Folge wird die Erfindung anhand der Figuren weiter beschrieben, wobei
Fig. 1 eine Schrägansicht der maßgeblichen Komponenten einer Vorrichtung in der Betriebsstellung,
Fig. 2 dieselbe Vorrichtung wie Fig. 1, jedoch mit teilweise ausgeblendeten Komponenten,
Fig. 3 eine Detailansicht im Bereich ausgeblendeter Komponenten, und
Fig. 4 eine Schnittdarstellung maßgeblicher Komponenten der Vorrichtung zeigen.

Wenn nicht anders angegeben, so entsprechen die Bezugszeichen folgenden Komponenten:
Stützstruktur 1, Kern 2, Manschette 3, Unterdruckkammer 4, Faserverbund-Bestandteil 5, Unterdruckleitung 6, Heizvorrichtung 7, Druckglied 8, Druckkörper 9, Dichtfolie 10, Dichtleiste 11, Wickelkörper 12, Heizmatte 13, Injektionsleitung 14.

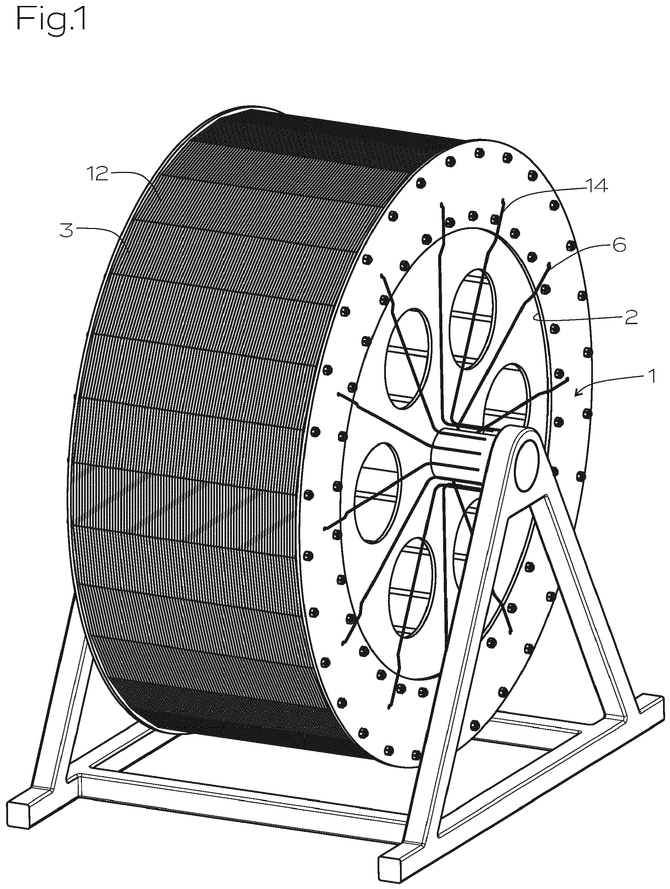

Fig. 1 zeigt eine schematische Schrägansicht einer erfindungsgemäßen Vorrichtung. Diese umfasst eine Stützstruktur 1 mit einem Kern 2 und einer Manschette 3. In der vorliegenden Ausführungsform umfasst die Stützstruktur 1 auch ein bodenstehendes Gestell, über das die Vorrichtung am Boden abgestützt sein kann. Zudem ist in dieser Ausführungsform auch ein Drehlager zur drehbaren Lagerung des Kerns 2 gegenüber dem Gestell vorhanden. Durch dieses Drehlager kann der Kern 2 verschwenkt bzw. gedreht werden. Dies kann Vorteile bei der Herstellung der Faserverbund-Bauteile haben. Beispielsweise um den Kern mit einer Wicklung zu versehen oder auch um zu verhindern, dass sich die Kunststoffmatrix während der Aushärtung im unteren Bereich ansammelt.

Die Manschette 3 ist in der vorliegenden Ausführungsform durch mehrere Wickelkörper 12 gebildet. Diese Wickelkörper 12 sind beispielsweise Seile, insbesondere Stahlseile. Die Wickelkörper 12 können nach dem Aufbringen der zwischen Kern 2 und Manschette 3 angeordneten Komponenten aufgebracht werden. Wird der Wickelkörper 12 durch Wickeln aufgebracht, so kann dies durch die drehbare bzw. schwenkbare Lagerung des Kerns 2 erleichtert werden.

Zudem umfasst die Vorrichtung in der vorliegenden Ausführungsform eine Unterdruckleitung 6 sowie eine Injektionsleitung 14. Die Unterdruckleitung 6 ist zur Erzeugung eines Unterdrucks bzw. eines Vakuums in der Unterdruckkammer 4 vorgesehen, wodurch verhindert werden soll, dass im herzustellenden Faserverbund-Bauteil Lufteinschlüsse vorhanden sind. Die Injektionsleitung 14 dient zur Zuführung der Kunststoffmatrix. Werden Faserstoffe verwendet, die bereits mit der Kunststoffmatrix getränkt sind, so kann eine derartige Injektionsleitung 14 auch entfallen.

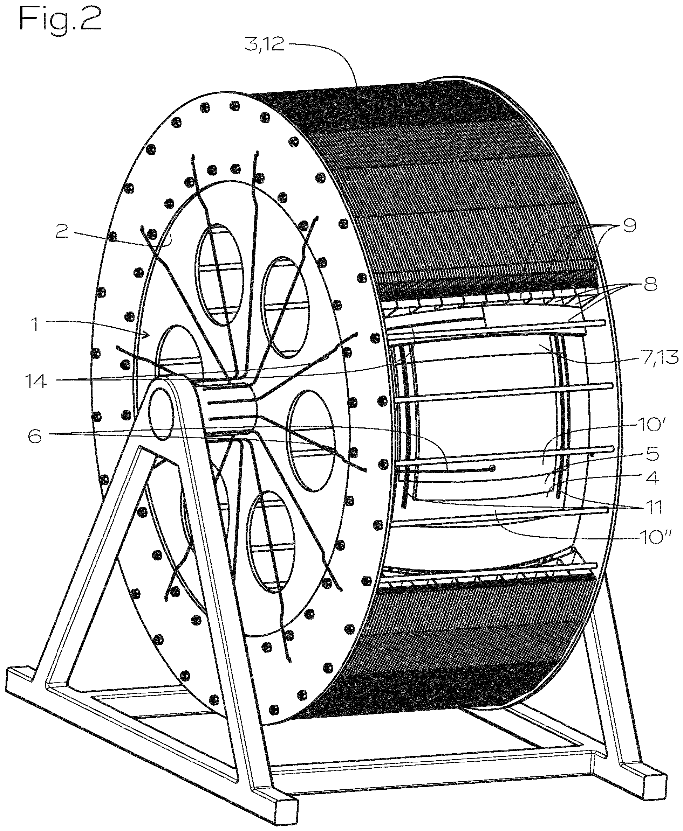

Fig. 2 zeigt dieselbe Vorrichtung wie Fig. 1, wobei manche Komponenten abschnittsweise ausgeblendet sind, um den inneren Aufbau beschreiben zu können.

Die Vorrichtung umfasst eine Unterdruckkammer 4, in der die Faserverbund-Bestandteile 5 angeordnet sind. Die Faserverbund-Bestandteile 5 sind insbesondere die Verstärkungsfasern, also beispielsweise Kohlefasern, insbesondere Kohlefasergewebe, aber gegebenenfalls auch Aramidfasern. Zusätzlich umfassen die Faserverbund-Bestandteile 5 auch die Kunststoffmatrix.

Die Unterdruckkammer 4 wird im vorliegenden Fall durch zwei Dichtfolien 10 gebildet, die zusätzlich im Randbereich noch mit jeweils einer Dichtleiste 11 abgedichtet sind. Gegebenenfalls können statt der Dichtfolie 10 auch ein schlauchförmiges Gebilde oder ähnliche geeignete Mittel eingesetzt werden. Die Dichtfolie 10 ist in allen Ausführungsformen bevorzugt ausreichend temperaturbeständig und ausreichend gasdicht, sodass während der Aushärtung der Faserverbund-Bestandteile 5 ein Unterdruck bzw. ein Vakuum aufrechterhalten werden kann.

Zur Erzeugung des Unterdrucks ist eine Unterdruckleitung 6 an die Unterdruckkammer 4 angeschlossen. Die Unterdruckleitung 6 ist entlang des Verlaufs der Unterdruckkammer 4 bzw. parallel zu deren Verlauf zwischen dem Kern 2 und der Manschette 3 herausgeführt und kann dann, außerhalb des Kerns 2 und außerhalb der Manschette 3, an eine Sammelleitung bzw. an eine Unterdruckpumpe angeschlossen werden. Bei einer drehbaren Ausführung des Kerns 2 kann eine Drehdurchführung bzw. eine flexible Leitung vorgesehen sein.

Zur Aushärtung der Faserverbund-Bestandteile 5 ist eine Heizvorrichtung 7 vorgesehen. In der vorliegenden Ausführungsform umfasst die Heizvorrichtung 7 eine Heizmatte 13, die ebenfalls schichtförmig zwischen Kern 2 und Manschette 3 eingelegt ist. Bevorzugt verläuft die Heizmatte 13 entlang der gesamten Unterdruckkammer 4 bzw. entlang der Faserverbund-Bestandteile 5, sodass eine gleichmäßige Temperatureinwirkung erfolgen kann. Alternativ oder zusätzlich kann die Heizvorrichtung 7 ein Heißluftgebläse oder einen beheizten Raum umfassen.

Zur Erzeugung einer auf die Faserverbund-Bestandteile 5 wirkenden Klemmkraft ist ein Druckglied 8 vorgesehen. Dieses Druckglied 8 erstreckt sich bevorzugt entlang des gesamten Verlaufs der Unterdruckkammer 4 bzw. entlang des gesamten Verlaufs der Faserverbund-Bestandteile 5.

In der vorliegenden Ausführungsform verläuft das Druckglied 8 zwischen der Manschette 3 und der Unterdruckkammer 4. Nachdem die Manschette 3 geschlossen wird, kann der Druck bzw. die Klemmkraft über das Druckglied 8 erhöht werden. Die Klemmkraft bzw. der Druck des Druckglieds 8 wirkt dabei zwischen dem Kern 2 und der Manschette 3. In der vorliegenden Ausführungsform umfasst das Druckglied 8 mehrere Druckkörper 9, die schlauch- bzw. balgförmig ausgebildet sind. Durch Erhöhung des Drucks innerhalb der Druckkörper 9 kann die Klemmkraft eingestellt bzw. erhöht werden.

In der vorliegenden Ausführungsform sind mehrere parallel verlaufende Druckkörper 9 vorgesehen, die beispielsweise schlauchförmig bzw. mattenförmig zusammengeschlossen sind und die beispielsweise mit Druckluft befüllt werden, um die Klemmkraft zu bewirken. In der vorliegenden Ausführungsform ist das Druckglied 8 somit mehrteilig aufgebaut und umfasst mehrere Druckkörper 9.

Der Druck für das Druckglied 8 bzw. den Druckkörper 9 kann über eine nicht dargestellte Druckleitung bereitgestellt werden.

Die Manschette 3 ist durch Wickelkörper 12 gebildet.

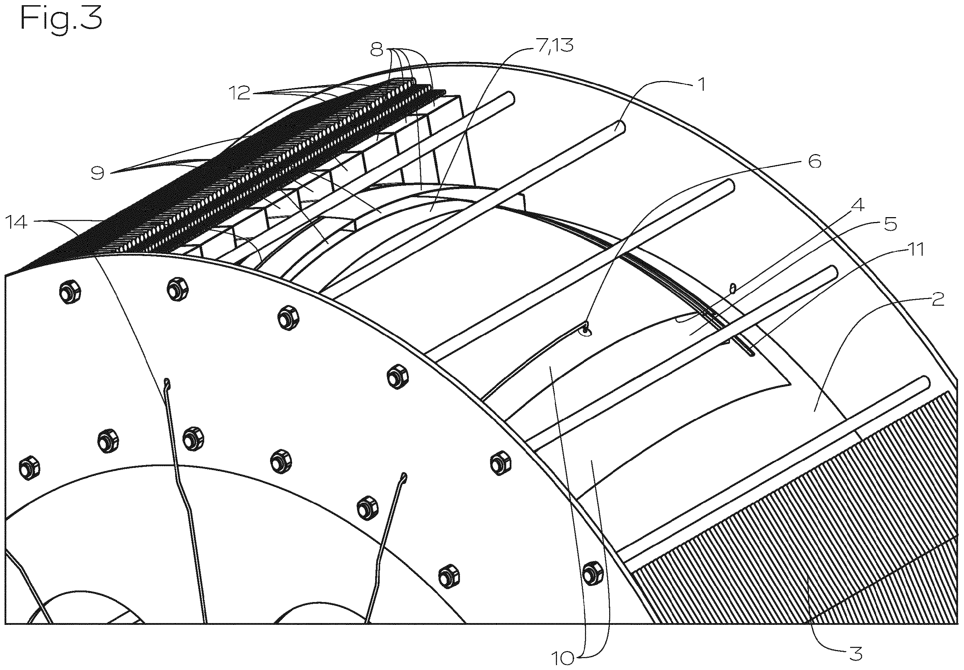

Fig. 3 zeigt eine Detailansicht einer Ausführungsform einer Vorrichtung, insbesondere der Vorrichtung aus Fig. 2, in der wiederum Teile ausgeblendet sind, um die einzelnen Komponenten besser beschreiben zu können.

Die Vorrichtung umfasst im Wesentlichen dieselben Komponenten, die auch in Fig. 2 beschrieben sind. Die Wickelkörper 12 sind mehrschichtig aufgetragen. Insbesondere ist eine erste Schicht an Wickelkörpern 12 aufgetragen, die am weitesten innen liegt.

Diese Wickelkörper 12 sind dünner ausgebildet als die Wickelkörper 12 einer weiteren Schicht, die weiter außen angeordnet ist. Zusammen bilden die Wickelkörper 12 eine im Wesentlichen durchgehende, gleichmäßige Manschette 3.

In allen Ausführungsformen ist bevorzugt vorgesehen, dass der Kern 2 und/oder die Manschette 3 gasdurchlässig ausgebildet sind. Der Kern 2 und die Manschette 3 wirken bevorzugt nicht als gasdichte Druckkammer, sondern lediglich zur Aufnahme der Druck- bzw. Klemmkräfte. So ist die vom Druckglied 8 ausgehende Kraft am Kern 2 und an der Manschette 3 abgestützt, um die Klemmkraft auf die Faserverbund-Bestandteile 5 ausüben zu können. Die Manschette 3 und der Kern 2 sind in der Betriebsstellung bevorzugt starr gegenüber einander angeordnet, um als Widerlager für die Klemmkraft wirken zu können.

In allen Ausführungsformen kann die Stützstruktur 1 Seitenscheiben umfassen, durch die eine seitliche Abgrenzung der Vorrichtung erfolgen kann. Die beiden Seitenscheiben können, wie auch in der vorliegenden Ausführungsform, durch Abstandhalter, insbesondere starr, miteinander verbunden werden. Die Abstandhalter können in allen Ausführungsformen als stangenförmige, mit den Seitenscheiben verbundene Abstandhalter ausgebildet sein.

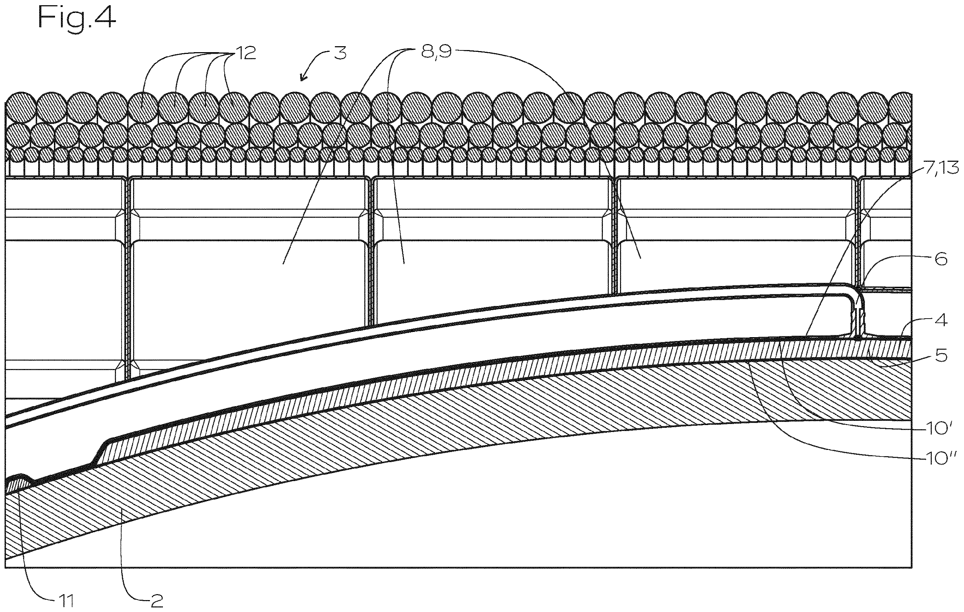

Fig. 4 zeigt eine Schnittdarstellung, die bevorzugt die Ausführungsformen der Figuren 1, 2 und/oder 3 betrifft.

Die Komponenten der Vorrichtung sind schichtförmig angeordnet. Der Kern 2 bildet in dieser Ausführungsform die Basis für den Aufbau der Vorrichtung. Um den Kern 2 wird die Unterdruckkammer 4 gelegt. Bevorzugt umfasst die Unterdruckkammer 4 mindestens eine Dichtfolie 10. In der Unterdruckkammer 4 sind die Faserverbund-Bestandteile 5 angeordnet, die in der Vorrichtung zu einem festen, formstabilen Faserverbund-Bauteil ausgehärtet werden sollen. Zur Bildung der Unterdruckkammer 4 werden in dieser Ausführungsform bevorzugt zwei Dichtfolien 10 übereinander gelegt, wobei zwischen den beiden Dichtfolien 10 die Faserverbund-Bestandteile 5 angeordnet sind.

Alternativ können die Faserverbund-Bestandteile 5 jedoch auch direkt auf den Kern 2 gelegt werden oder es wird ein Trennmittel, wie beispielsweise eine Trennschicht, zwischen den Kern 2 und die Faserverbund-Bestandteile 5 aufgebracht. Zur Bildung einer Unterdruckkammer 4 kann in diesem Fall eine Dichtfolie 10 zusammen mit dem Kern 2 die Unterdruckkammer 4 bilden.

Zur Erzeugung des Unterdrucks ist die Unterdruckkammer 4 mit einer Unterdruckleitung 6 verbunden. Diese wird in dieser Ausführungsform in einem ersten Schritt zwischen zwei Druckkörpern 9 in radialer Richtung hindurchgeführt. In weiterer Folge ist die Unterdruckleitung 6 abgewinkelt und verläuft entlang des Verlaufs der Unterdruckkammer 4 seitlich aus der Vorrichtung heraus.

Das Druckglied 8 umfasst mehrere Druckkörper 9, die unterschiedlich verlaufend angeordnet sein können.

Zur Herstellung großvolumiger, hohlkörperförmiger Faserverbund-Bauteile kann insbesondere wie folgt vorgegangen werden:
Eingangs werden die Faserverbund-Bestandteile 5 in der Unterdruckkammer 4 angeordnet. Dieser Schritt erfolgt insbesondere beim Erstellen des schichtförmigen Aufbaus der Vorrichtung. So wird bei einer bevorzugten Ausführungsform eine Dichtfolie 10 um den Kern 2 gelegt. In einem zweiten Schritt werden die Faserverbund-Bestandteile 5, beispielsweise Fasermatten oder Faserbündel, um den Kern 2 und damit auch auf bzw. um die erste Dichtfolie 10' gelegt. Hierbei ist es vorteilhaft, wenn der Kern 2 drehbar an der Stützstruktur 1 gelagert ist, sodass eine einfache Wickelung der Faserverbund-Bestandteile 5 erfolgen kann.

Sind die Faserverbund-Bestandteile 5 wie gewünscht um den Kern 2 gelegt, so kann die zweite Dichtfolie 10 auf bzw. um die Faserverbund-Bestandteile 5 und auch um den Kern 2 gelegt werden. Die beiden Dichtfolien 10 sind dabei vorzugsweise derart ausgestaltet und angeordnet, dass sie die Faserverbund-Bestandteile 5 in seitlicher Richtung überlappen und dadurch auch seitlich abdichten können. Insbesondere in diesen seitlichen Bereichen können Dichtleisten 11 angeordnet werden, durch die eine Abdichtung erfolgt.

Im Zuge der Bildung des schichtförmigen Aufbaus kann die Heizmatte 13 der Heizvorrichtung 7 um den Kern 2 gelegt werden, wobei die Heizmatte 13 bevorzugt außen um die Unterdruckkammer 4 gelegt wird. Die Heizvorrichtung 7 dient der Beheizung und Aushärtung der Faserverbund-Bestandteile 5.
Im Zuge der Bildung des schichtförmigen Aufbaus wird das Druckglied 8 um den Kern 2 gelegt werden. Insbesondere wird das Druckglied 8 um die Unterdruckkammer 4 und, wenn vorhanden, um die Heizmatte 13 gelegt.

In einem weiteren Schritt wird die Manschette 3 um den Kern 2 gelegt. Insbesondere wird die Manschette 3 um die zuvor aufgetragenen Komponenten, also insbesondere um das Druckglied 8, gelegt. Obwohl die Manschette 3 bevorzugt aus flexiblen bzw. aus verformbaren Wickelkörpern 12 zusammengesetzt ist, wird bei der Montage eine feste Manschette 3 gebildet.

Im Zuge der Bildung des schichtförmigen Aufbaus, insbesondere nach dem Schließen der Manschette 3, wird die Kunststoffmatrix als Faserverbund-Bestandteil 5 mit den restlichen Faserverbund-Bestandteilen 5, insbesondere mit den Verstärkungsfasern, in Kontakt gebracht. Hierzu wird die Kunststoffmatrix bevorzugt in flüssiger bzw. pastöser Form in die Unterdruckkammer 4 eingeleitet. Hierzu können eine oder mehrere Injektionsleitungen 14 vorgesehen sein.

In einem weiteren Schritt wird in der Unterdruckkammer 4 ein Unterdruck erzeugt. Dies erfolgt durch an die Unterdruckkammer 4 angeschlossene Unterdruckleitungen 6, die wiederum mit einer Unterdruckpumpe verbunden sind.

In einem weiteren Schritt wird die Heizvorrichtung 7 aktiviert, um eine Beheizung und Aushärtung der Faserverbund-Bestandteile 5 zu bewirken. Zuvor oder danach wird das Druckglied 8 aktiviert, um eine Klemmkraft bzw. einen Druck auf die Faserverbund-Bestandteile 5 auszuwirken. Durch die Klemmung wird überschüssige Kunststoffmatrix entfernt, um die Qualität und insbesondere das Gewicht des herzustellenden Faserverbund-Bauteils zu verbessern.

Gegebenenfalls kann die Heizvorrichtung 7 statt einer Heizmatte 13 auch andere Mittel zur Wärmeeinbringung aufweisen. Statt oder zusätzlich zu einer Heizmatte 13 kann beispielsweise das Druckglied 8 mit einem beheizten Medium durchströmt werden. Alternativ kann auch die gesamte Vorrichtung in einen Ofen gestellt werden. Im Gegensatz zu einem Autoklaven muss jedoch in diesem Ofen kein Überdruck herrschen, da die vorteilhaft wirkende Druckkraft bereits durch die spezielle Anordnung des Druckglieds 8 zwischen dem Kern 2 und der Manschette 3 bewirkt wird.

Ist das Faserverbund-Bauteil ausreichend ausgehärtet, so können in einem nächsten Schritt die Manschette 3 und weitere Komponenten entnommen werden. Gegebenenfalls ist es notwendig, den Kern 2 mehrteilig auszugestalten, um ihn aus dem ausgehärteten Faserverbund-Bauteil entfernen zu können.

Das Auftragen der Faserverbund-Bestandteile 5 auf den Kern 2 kann beispielsweise durch Umwickeln des Kerns 2 mit einer Faserverbundmatte erfolgen. Gegebenenfalls können auch einzelne Fasern oder Faserbündel in einem vorbestimmten Wickelmuster um den Kern 2 gelegt werden. Dieses Wickeln der Faserverbund-Bestandteile 5, insbesondere der Verstärkungsfasern, kann händisch oder auch automatisiert bzw. automatisch erfolgen. Bevorzugt wird diese Handlung durch die Drehbarkeit des Kerns 2 begünstigt.

## Patentansprüche

1. Vorrichtung zur Bildung großvolumiger, hohlkörperförmiger Faserverbund-Bauteile, wobei die Vorrichtung in der Betriebsstellung folgende Komponenten umfasst:
- eine Stützstruktur (1) mit einem Kern (2) und mit einer den Kern (2) umgebenden Manschette (3),
- eine zwischen Kern (2) und Manschette (3) eingeklemmte, flexible Unterdruckkammer (4) in der die auszuhärtenden Faserverbund-Bestandteile (5) angeordnet sind,
- eine an die Unterdruckkammer (4) angeschlossene Unterdruckleitung (6) zur Erzeugung des Unterdrucks in der Unterdruckkammer (4),
- mindestens ein flexibles Druckglied (8) zur flächigen, und insbesondere gleichmäßigen, Aufbringung der auf die flexible Unterdruckkammer (4) wirkenden Klemmkraft,
- und eine den Innenraum der Unterdruckkammer (4) beheizende Heizvorrichtung (7) zur Aushärtung der Faserverbund-Bestandteile (5).

2. Vorrichtung nach Anspruch 1, **dadurch gekennzeichnet,**
- **dass** das Druckglied (8) mindestens einen entlang der Unterdruckkammer (4) verlaufenden elastisch verformbaren schlauch- oder balgartigen Druckkörper (9) umfasst, dessen Innenbereich zur Erzeugung der Klemmkraft mit Überdruck beaufschlagt ist,
- wobei bevorzugt mehrere dieser Druckkörper (9) vorgesehen sind, die zusammen ein matten- und/oder ringförmiges Druckglied (8) bilden.

3. Vorrichtung nach Anspruch 1 oder 2, **dadurch gekennzeichnet,**
- **dass** ein Druckglied (8) zwischen dem Kern (2) und der Unterdruckkammer (4) verläuft,
- und/oder dass ein Druckglied (8) zwischen der Unterdruckkammer (4) und der Manschette (3) verläuft.

4. Vorrichtung nach einem der Ansprüche 1 bis 3, **dadurch gekennzeichnet, dass** jene Seitenfläche des Druckglieds (8), die der Unterdruckkammer (4) zugewandt ist, eine der Form des zu bildenden Faserverbund-Bauteils angepasste Form aufweist.

5. Vorrichtung nach einem der Ansprüche 1 bis 4, **dadurch gekennzeichnet,**
- **dass** die Wände der Unterdruckkammer (4) durch mindestens eine Dichtfolie (10) gebildet sind,
- insbesondere dass die Wände der Unterdruckkammer (4) durch zwei Dichtfolien (10', 10") gebildet sind, die gegebenenfalls durch zwei Dichtleisten (11) gegenüber einander abgedichtet sind.

6. Vorrichtung nach einem der Ansprüche 1 bis 5, **dadurch gekennzeichnet, dass** die Unterdruckkammer (4), zur Erzeugung eines hohlkörperförmigen Faserverbund-Bauteils, den Kern (2) ringförmig oder hohlkörperförmig umgibt.

7. Vorrichtung nach einem der Ansprüche 1 bis 6, **dadurch gekennzeichnet, dass** die Vorrichtung einen schichtförmigen Aufbau aufweist, der von innen nach außen folgende Schichten umfasst:
- Kern (2),
- erste Wand der Unterdruckkammer (4),
- zweite Wand der Unterdruckkammer (4),
- Manschette (3),
- wobei zwischen der ersten Wand und der zweiten Wand der Unterdruckkammer (4) die auszuhärtenden Faserverbund-Bestandteile (5) angeordnet sind,
- wobei zwischen dem Kern (2) und der Unterdruckkammer (4) und/oder zwischen der Unterdruckkammer (4) und der Manschette (3) ein Druckglied (8) verläuft,
- und wobei gegebenenfalls eine Heizmatte (13) der Heizvorrichtung (7) zwischen zwei Schichten angeordnet ist.

8. Vorrichtung nach einem der Ansprüche 1 bis 7, **dadurch gekennzeichnet, dass** der Kern (2) und/oder die Manschette (3) gasdurchlässig bzw. undicht ist oder sind.

9. Vorrichtung nach einem der Ansprüche 1 bis 8, **dadurch gekennzeichnet, dass** die Manschette (3) mindestens einen flexiblen Wickelkörper (12) umfasst, der fest anliegend um die innenliegenden Komponenten der Vorrichtung gewickelt ist, wobei der Wickelkörper (12) beispielsweise ein wickelbares Seil, ein Band oder eine Kette ist.

10. **Verfahren** zur Bildung großvolumiger, hohlkörperförmiger Faserverbund-Bauteile, insbesondere in einer Vorrichtung nach einem der Ansprüche 1 bis 9, umfassend folgende Schritte:
- Anordnen einer flexiblen Unterdruckkammer (4) zwischen einem Kern (2) und einer den Kern (2) umgebenden Manschette (3), wobei in der Unterdruckkammer (4) die auszuhärtenden Faserverbund-Bestandteile (5) angeordnet werden,
- Erzeugen eines Unterdrucks in der Unterdruckkammer (4),
- Einklemmen der Unterdruckkammer (4) und der in der Unterdruckkammer (4) angeordneten Faserverbund-Bestandteile (5) zwischen dem Kern (2) und der Manschette (3) durch Erzeugen einer Klemmkraft mithilfe mindestens eines flexiblen Druckglieds (8), wobei die Klemmkraft flächig und insbesondere gleichmäßig auf die flexible Unterdruckkammer (4) wirkt,
- und Aushärten der Faserverbund-Bestandteile (5) durch Beheizen des Innenraums der Unterdruckkammer (4) durch eine Heizvorrichtung (7).

11. Verfahren nach Anspruch 10, **dadurch gekennzeichnet,**
- **dass** eine erste Dichtfolie (10) um den Kern (2) gelegt wird,
- **dass** anschließend Faserverbund-Bestandteile (5), insbesondere Kohlefasern, im Bereich der ersten Dichtfolie (10) um den Kern (2) gelegt werden,
- **dass** anschließend eine zweite Dichtfolie (10) im Bereich der Faserverbund-Bestandteile (5) um den Kern (2) gelegt wird, wobei die erste Dichtfolie (10) und die zweite Dichtfolie (10) gegenüber einander durch eine Überlappung und insbesondere über Dichtleisten (11) abgedichtet werden, um die flexible Unterdruckkammer (4) zu bilden, und wobei mindestens eine Unterdruckleitung (6) an die Unterdruckkammer (4) angeschlossen wird,
- **dass** anschließend das Druckglied (8) im Bereich der Unterdruckkammer (4) um den Kern (2) gelegt wird,
- und **dass** anschließend im Bereich des Druckglieds (8) die Manschette (3) um den Kern (2) gelegt und insbesondere gewickelt wird.

12. Verfahren nach Anspruch 10 oder 11, **dadurch gekennzeichnet, dass** das flexible Druckglied (8), insbesondere ein elastisch verformbarer, schlauch- oder balgartiger Druckkörper (9) des Druckglieds (8), zur Erzeugung der Klemmkraft mit einem Überdruck beaufschlagt und insbesondere gefüllt wird.

13. Verfahren nach einem der Ansprüche 10 bis 12, **dadurch gekennzeichnet,**
- **dass** im Bereich der Unterdruckkammer (4) zwischen dem Kern (2) und der Manschette (3) eine Heizmatte (13) der Heizvorrichtung (7) um den Kern (2) gelegt wird, über die die Faserverbund-Bestandteile (5) beheizt und ausgehärtet werden,
- und/oder dass das Druckglied (8) mit einem von der Heizvorrichtung (7) beheizten Medium, wie insbesondere heiße Druckluft, gefüllt und/oder durchströmt wird.

14. Verfahren nach einem der Ansprüche 10 bis 13, **dadurch gekennzeichnet, dass** eine Injektionsleitung (14) an die Unterdruckkammer (4) angeschlossen wird oder ist, über die mindestens ein weiterer Faserverbund-Bestandteil (5), insbesondere Harz, in die Unterdruckkammer (4) injiziert wird, und dass der weitere Faserverbund-Bestandteil (5) später durch Beheizen des Innenraums der Unterdruckkammer (4) durch die Heizvorrichtung (7) ausgehärtet wird.
